# EUROPÄISCHE PATENTSCHRIFT

(11) **EP 0 922 864 B1**
(45) Veröffentlichungstag und Bekanntmachung des Hinweises auf die Patenterteilung: **28.08.2002**
(21) Anmeldenummer: 98121107.1
(22) Anmeldetag: 09.11.1998
(51) Int. Cl.: F16B 13/12

(54) **Spreizdübel**
Expansion plug
Cheville d'expansion

(30) Priorität: 11.12.1997 DE 19754977
(43) Veröffentlichungstag der Anmeldung: 16.06.1999
(73) Patentinhaber: fischerwerke Artur Fischer GmbH & Co. KG, 72178 Waldachtal (DE)
(72) Erfinder: Arnold, Norbert, Dr., 72178 Waldachtal (DE); Nehl, Wolfgang, 72178 Waldachtal (DE)

(56) Entgegenhaltungen:
- EP-A- 0 625 643
- DE-A- 3 017 108
- DE-A- 3 241 158
- DE-A- 4 026 944
- DE-U- 1 954 221

## Beschreibung

Die Erfindung betrifft einen Spreizdübel mit den Merkmalen des Oberbegriffs des Anspruchs 1.

Aus der DE 40 26 944 A1 ist ein derartiger Spreizdübel bekannt, der einen sich in Längsrichtung des Spreizdübels erstreckenden Spreizbereich aufweist. im Spreizbereich sind scheibenförmige Spreizelemente in Radialebenen des Spreizdübels angeordnet. Zur Verbindung der Spreizelemente miteinander weist der bekannte Spreizdübel zwei einander gegenüberliegende, in Längsrichtung des Spreizdübels verlaufende Befestigungsstege an seinem Umfang auf, mit denen die scheibenförmigen Spreizelemente an einer Stelle ihres Umfangs verbunden sind. Dabei ist jedes zweite Spreizelement mit einem der beiden Befestigungsstege, das jeweils dazwischenliegende Spreizelement mit dem anderen Befestigungssteg verbunden. Die Spreizelemente sind ähnlich den Zinken eines Kamms an den Befestigungsstegen angeordnet, sie greifen kammartig ineinander.

Jedes der scheibenförmigen Spreizelemente ist mit einem axialen Durchgangsloch versehen, das exzentrisch im Spreizelement angebracht ist. Dabei sind die Durchgangslöcher benachbarter Spreizelemente in unterschiedlichen Richtungen versetzt zueinander angeordnet. Die Durchgangslöcher bilden gemeinsam ein Spreizloch des Spreizdübels. Durch Einbringen eines stiftförmigen Spreizkörpers, beispielsweise eines Spreiznagels oder einer Spreizschraube, werden die Durchgangslöcher der scheibenförmigen Spreizelemente koaxial zueinander und zum Spreizdübel ausgerichtet, die Spreizelemente verschieben sich dadurch in radialer Richtung des Spreizdübels zueinander, wodurch der Spreizdübel aufgespreizt und in einem Bohrloch verankert wird.

Um den bekannten Spreizdübel mit den exzentrisch zueinander versetzt angeordneten Durchgangslöchern in seinen scheibenförmigen Spreizelementen durch Spritzgießen aus Kunststoff herstellen zu können, sind die beiden Befestigungsstege mit den mit ihnen verbundenen Spreizelementen über ein ansich bekanntes, sogenanntes Filmscharnier an einem vorderen Dübelende gelenkig miteinander verbunden. Die beiden Befestigungsstege mit den Spreizelementen werden in einer auseinandergeklappten Stellung, in der die Befestigungsstege in Verlängerung miteinander angeordnet sind, gespritzt und nach dem Entnehmen aus einem Spritzgießwerkzeug zusammengeklappt, so daß die Spreizelemente der beiden Befestigungsstege kammartig ineinandergreifend zu liegen kommen.

Der Erfindung liegt die Aufgabe zugrunde, einen Spreizdübel der vorstehend genannten Art so auszubilden, daß er spritztechnisch einstückig herstellbar und unmittelbar nach dem Spritzgießen verwendbar ist, ohne daß ein weiterer Arbeitsgang notwendig ist, um den Spreizdübel nach dem Spritzgießen gebrauchsfertig zu machen.

Diese Aufgabe wird erfindungsgemäß durch die Merkmale des Anspruchs 1 gelöst. Beim erfindungsgemäßen Spreizdübel sind die Spreizelemente in einem Ausgangszustand des Spreizdübels mit einem Zwischenraum voneinander angeordnet, der quer durch den Spreizdübel hindurchgeht. Mit Ausgangszustand ist der Zustand des Spreizdübels gemeint, in dem dieser einem Spritzgießwerkzeug entnommen wird. Diese Ausbildung des Spreizdübels ermöglicht ein beispielsweise zweiteiliges, in einer Axialebene des Spreizdübels geteiltes Spritzgießwerkzeug mit einem im Spritzgießwerkzeug fest angeordneten Kern, der die Form des Zwischenraums zwischen den Spreizelementen aufweist. Nach dem Spritzgießen wird der Kern beim Öffnen des Spritzgießwerkzeugs senkrecht zur Trennebene des Spritzgießwerkzeugs, d. h. seitlich in radialer Richtung des Spreizdübels aus dem Zwischenraum zwischen den Spreizelementen herausgezogen. Der erfindungsgemäße Spreizdübel kann so hergestellt werden, daß im Ausgangszustand nach dem Spritzgießen die Spreizelemente nicht ineinandergreifen, d. h. einander benachbarte Spreizelemente überdecken einander in axialer Richtung des Spreizdübel betrachtet nicht. Der Spreizdübel kann auch so hergestellt werden, daß die Spreizelemente im Ausgangszustand des Spreizdübels nach der Entnahme aus dem Spritzgießwerkzeug die Spreizelemente ein Stück weit ineinandergreifen, d. h. in axialer Richtung des Spreizdübels betrachtet überdecken einander benachbarte Spreizelemente teilweise. Der erfindungsgemäße Spreizdübel wird dadurch gebrauchsfertig gemacht, daß seine Spreizelemente einander vollständig überlappend zwischeneinander gedrückt werden. Das Zwischeneinanderdrücken der Spreizelemente kann beim Einführen des Spreizdübels in ein Bohrloch erfolgen, so daß kein separater Arbeitsgang hierfür notwendig ist. Der erfindungsgemäße Spreizdübel ist also unmittelbar nach seiner Herstellung anwendungsbereit. Zum Auseinanderspreizen der Spreizelemente weisen die Spreizelemente des erfindungsgemäßen Spreizdübels axial durchgehende Spreizöffnungen auf. Die Spreizöffnungen können vollständig von den Spreizelementen umschlossene Durchgangslöcher sein, die Spreizöffnungen können allerdings auch als seitlich offene Ausnehmungen am Umfang der Spreizelemente ausgebildet sein. Die Spreizöffnungen sind so in den Spreizelementen angeordnet, daß sie im Ausgangszustand des Spreizdübels nach dessen Entnahme aus einem Spritzgießwerkzeug nicht von anderen Spreizelementen verdeckt werden. Dies läßt sich durch deckungsgleiche Anordnung der Spreizöffnungen im Ausgangszustand erreichen. Auch ist es möglich, mit den Spreizöffnungen im Ausgangszustand des Spreizdübels deckungsgleiche Durchgangsöffnungen vorzusehen, die nach dem Spritzgießen des Spreizdübels nicht weiter benötigt werden. Des weiteren ist es möglich, einander benachbarte Spreizelemente im Ausgangszustand des Spreizdübels soweit radial auseinandergezogen anzuordnen, daß sie ihre Spreizöffnungen nicht gegenseitig verdecken. Durch die im Ausgangszustand des Spreizdübels unverdeckte Anordnung der Spreizöffnungen in den Spreizelementen läßt sich der erfindungsgemäße Spreizdübel mit einem oder mehreren, in das Spritzgießwerkzeug einlegbaren Formkernen herstellen. Die Formkerne durchgreifen die Spreizelemente und formen die Spreizöffnungen in den Spreizelementen. Nach Entnahme des Spreizdübels aus dem Spritzgießwerkzeug können die Formkerne axial aus den Spreizelementen herausgezogen werden.

Die Spreizöffnungen können konzentrisch in den Spreizelementen und konzentrisch zum Spreizdübel angeordnet sein. Die Aufspreizung erfolgt in diesem Fall mit einem Spreizkörper, dessen Durchmesser größer als ein Quermesser der Spreizöffnungen ist, so daß der Spreizkörper die Spreizelemente beim Eintreiben des Spreizkörpers in das von den Spreizöffnungen gebildete Spreizloch die Spreizelemente radial aufweitet und auf diese Weise den Spreizdübel zur Verankerung in einem Bohrloch aufspreizt. Vorzugsweise sind die Spreizöffnungen exzentrisch in den Spreizelementen angeordnet. Durch Eindringen eines stiftförmigen Spreizkörpers werden die Spreizöffnungen koaxial zueinander und koaxial zum Spreizdübel ausgerichtet. Dabei werden einander benachbarte Spreizelemente radial gegeneinander verschoben und auf diese Weise der Spreizdübel aufgespreizt. Auch hier kann ein Spreizkörper in das von den Spreizöffnungen der Spreizelemente gebildete Spreizloch des Spreizdübels eingebracht werden, dessen Durchmesser größer als ein Quermesser der Spreizöffnungen der Spreizelemente ist. Dadurch werden zusätzlich zur radialen Verschiebung einander benachbarter Spreizelemente gegeneinander durch das koaxiale Ausrichten ihrer Spreizöffnungen die Spreizelemente aufgeweitet und die Aufspreizung des Spreizdübels auf diese Weise vergrößert.

Bei exzentrischer Anordnung der Spreizöffnungen können die Spreizöffnungen parallel zu einer gedachten Tangente an der Umfangsstelle des Spreizelements, an der das Spreizelement mit dem Befestigungssteg verbunden ist, exzentrisch versetzt im jeweiligen Spreizelement angeordnet sein. Beim Aufspreizen werden in diesem Fall einander benachbarte Spreizelemente so in radialer Richtung verschoben, daß sich ein Abstand der Befestigungsstege voneinander nicht oder nur geringfügig verändert. Die Spreizelemente treten rippenförmig seitlich auseinander. Dies hat insbesondere in Hohlbaustoffen wie beispielsweise Hohlblocksteinen den Vorteil, daß Spreizelemente des Spreizdübels Hohlräume des Hohlbaustoffs begrenzende Wandungen wie Stege des Hohlblocksteins formschlüssig hintergreifen. Bei einer Ausgestaltung der Erfindung sind die Spreizöffnungen exzentrisch vom Befestigungssteg weg versetzt angeordnet, mit dem das jeweilige Spreizelement verbunden ist. Beim Aufspreizen des Spreizdübels werden in diesem Fall einander benachbarte Spreizelemente so in einer Richtung radial zueinander verschoben, daß sich ein Abstand der Befestigungsstege vergrößert, d. h. die Befestigungsstege werden radial zum Spreizdübel auseinandergespreizt. Dies ergibt eine großflächige Anlage des Spreizdübels im Spreizbereich, die insbesondere in Vollbaustoffen zu einer hohen Verankerungskraft führt.

In bevorzugter Ausgestaltung des erfindungsgemäßen Spreizdübels weisen die Spreizelemente eine sich in Querrichtung zu einer Seite hin ändernde, axiale Dicke auf. Die Spreizelemente werden vorzugsweise in Richtung des Befestigungsstegs, mit dem sie verbunden sind, dicker. Die Dicke einander benachbarter Spreizelemente vergrößert sich in entgegengesetzten Richtungen. Auf diese Weise wird der Zwischenraum zwischen den Spreizelementen im Ausgangszustand des Spreizdübels nach seiner Entnahme aus dem Spritzgießwerkzeug erreicht. Werden die Spreizelemente beispielsweise beim Einbringen des Spreizdübels in ein Bohrloch zwischeneinander bewegt, schließt sich der Zwischenraum zwischen den Spreizelementen oder zumindest verkleinert sich der Zwischenraum zwischen den Spreizelementen. Auf diese Weise läßt sich der erfindungsgemäße Spreizdübel so ausbilden, daß im Ausgangszustand ein Zwischenraum zwischen seinen Spreizelementen besteht, der ein Entformen nach dem Spritzgießen aus dem Spritzgießwerkzeug ermöglicht, wobei im Gebrauchszustand die Spreizelemente paßgenau zwischeneinander zu liegen kommen. Um die Spreizelemente beim Einbringen des Spreizdübels in ein Bohrloch zwischeneinander zu bewegen, weist der Spreizdübel bei einer Ausgestaltung der Erfindung eine Verjüngung an seinem vorderen Dubelende auf, die sich auf einen Durchmesser verjüngt, der kleiner als ein Nenndurchmesser und somit kleiner als der Durchmesser des Bohrlochs ist, in das der Spreizdübel eingebracht wird. Durch axiales Einbringen des Spreizdübels in das Bohrloch werden dessen Spreizelemente an der Verjüngung beginnend zwischeneinander gedrückt.

Eine Ausgestaltung der Erfindung weist einen hohlzylindrischen Dübelschaft zur Aufnahme des stiftförmigen Spreizkörpers auf. Um diesen Dübelschaft stabil mit dem die Spreizelemente aufweisenden Spreizbereich zu verbinden, weist der Spreizdübel einen Übergangstubus auf, der den Dübelschaft mit dem Spreizbereich verbindet und dessen Querschnitt veränderbar ist, um den Spreizdübel einstückig durch Spritzgießen herstellen zu können. Vorzugsweise ist der Übergangstubus als eine Art Faltenbalg mit in Längsrichtung des Spreizdübels verlaufenden Falten ausgebildet, die ein radiales Aufweiten des Übergangstubus beim Einbringen des Spreizkörpers ermöglichen. Der Übergangstubus verhindert ein Abknicken des Spreizdübels im Bereich des Übergangs vom Dübelschaft zum Spreizbereich beim Eintreiben des Spreizdübels in ein Bohrloch.

Die Erfindung wird nachfolgend anhand in der Zeichnung dargestellter Ausführungsbeispiele näher erläutert. Es zeigen:
- Figur 1: einen erfindungsgemäßen Spreizdübel im Achsschnitt;
- Figur 2: einen Querschnitt entlang Linie II-II in Figur 1 in vergrößerter Darstellung;
- Figur 3: ein Spreizelement des Spreizdübels in Seitenansicht gemäß Pfeil III in Figur 1 in vergrößerter Darstellung;
- Figur 4: einen Querschnitt entlang Linie IV-IV in Figur 1 in vergrößerter Darstellung; und
- Figur 5: einen Querschnitt entlang Linie V-V in Figur 1 in vergrößerter Darstellung.

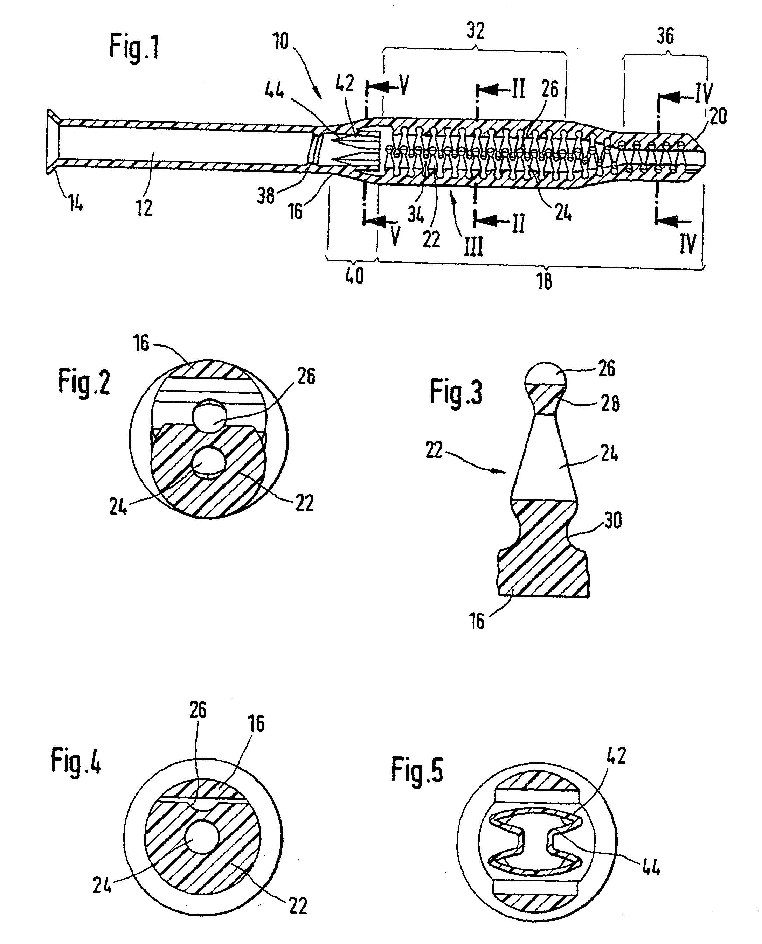

Der in Figur 1 dargestellte, erfindungsgemäße Spreizdübel 10 ist ein einstückig aus Kunststoff hergestelltes Spritzgießteil. Er weist einen hohlzylindrischen Dübelschaft 12 auf, der an seinem rückwärtigen Ende einstückig mit einem seitlich überstehenden Einschlagbund 14 versehen ist. An einem vorderen Ende geht der Dübelschaft 12 über zwei Befestigungsstege 16 in einen Spreizbereich 18 über. An seinem vorderen Ende verjüngt sich der Spreizdübel 10 mit einem kegelstumpfförmigen Einschlagende 20.

Die Befestigungsstege 16 verlaufen am Umfang und in Längsrichtung des Spreizdübels 10 durchgehend vom Dübelschaft 12 über den gesamten Spreizbereich 18 bis zum Einschlagende 20 des Spreizdübels 10. Die beiden Befestigungsstege 16 sind einander gegenüberliegend angeordnet. Von den Befestigungsstegen 16 stehen scheibenförmige Spreizelemente 22 ähnlich der Zinken eines Kamms nach innen ab. Die Spreizelemente haben in Stirnansicht (Figur 2) die Form von Kreisscheiben, von denen ein Kreisscheibensegment an der dem jeweils gegenüberliegenden Befestigungssteg 16 zugewandten Umfangsstelle abgetrennt ist. Die Spreizelemente 22 haben einen Durchmesser, der näherungsweise einem Durchmesser des Dübelschafts 12 entspricht. Jedes Spreizelement 22 weist eine axial durchgehende Spreizöffnung 24 in Form eines Lochs auf, das exzentrisch in Richtung des jeweils anderen Befestigungsstegs 16 versetzt exzentrisch im Spreizelement 22 angeordnet ist. Der jeweils andere Befestigungssteg 16 ist der Befestigungssteg 16, mit dem das jeweilige Spreizelement 22 nicht verbunden ist. Die mit einem Befestigungssteg 16 verbundenen Spreizelemente 22 sind in Stirnansicht des Spreizdübels 10 deckungsgleich. Soweit sie eine Spreizöffnung 24 der mit dem anderen Befestigungssteg 16 verbundenen Spreizelemente 22 überdecken, weisen die Spreizelemente 22 eine kreisbogenförmige Ausnehmung 26 auf.

Im Profil (Figur 3) haben die scheibenförmigen Spreizelemente 22 näherungsweise die Form eines Keils oder eines spitzwinkligen Dreiecks, d. h. eine axiale Dicke der Spreizelemente 22 vergrößert sich in Richtung des Befestigungsstegs 16, mit dem das jeweilige Spreizelement 22 einstückig ist. In seinem dem Befestigungssteg 16 abgewandten Kopfbereich weist das Spreizelement 22 eine mit ihm einstückige, quer, also parallel zum Befestigungssteg 16 verlaufende, näherungsweise zylinderförmige Verdickung 28 auf, in der auch die Ausnehmung 26 ausgebildet ist. Im Fußbereich am Übergang zum Befestigungssteg 16 weist das Spreizelement 22 auf beiden Stirnseiten zur Verdickung 28 komplementäre Ausnehmungen 30 auf.

Die Spreizelemente 22 der beiden Befestigungsstege 16 greifen wie Zähne zweier Zahnstangen, die mit einander zugewandten Zähnen ineinander gelegt sind, zwischeneinander. In einem Ausgangszustand des Spreizdübels 10, in welchem dieser einem nicht dargestellten Spritzgießwerkzeug entnommen wird, weisen die Spreizelemente 22 der beiden Befestigungsstege 16 einen Abstand in radialer Richtung des Spreizdübels 12 voneinander auf, so daß die Spreizelemente 22 der beiden Befestigungsstege 16 im wesentlichen nur mit ihrer Verdickung 28, also mit ihrem Kopfbereich, zwischeneinander greifen. Dieser Ausgangszustand des Spreizdübels 10 ist in Figur 1 über einen Teil der Länge des Spreizbereichs 18 dargestellt und mit der Bezugszahl 32 versehen. Da die axiale Dicke der Spreizelemente 22 in Richtung ihres Kopfbereichs abnimmt, besteht im Ausgangszustand 32 des Spreizdübels 10 ein Zwischenraum 34 zwischen den Spreizelementen 22, der quer durch den Spreizdübel 10 hindurchgeht. Dieser Zwischenraum 34 verläuft in Längsrichtung des Spreizdübels 10 betrachtet mäander- oder zick-zackförmig. Der quer durch den Spreizdübel 10 hindurchgehende Zwischenraum 34 ermöglicht ein Entformen des Spreizdübels 10 nach dem Spritzgießen durch seitliches Herausziehen eines die Geometrie des Zwischenraums 34 aufweisenden Gießkerns aus dem Spreizbereich 18 des Spreizdübels 10. Dieser nicht dargestellte Gießkern kann einstückig mit nicht dargestellten Werkzeughälften eines Spritzgießwerkzeugs sein. Um den Spreizdübel 10 gebrauchsfertig zu machen, werden die Spreizelemente 22 der beiden Befestigungsstege 16 in radialer Richtung des Spreizdübels 10 ineinander gedrückt. Dieser Gebrauchszustand des Spreizdübels ist in Figur 1 im vorderen Bereich des Spreizbereichs 18 dargestellt und mit der Bezugszahl 36 versehen. Der Gebrauchszustand ist auch in der Querschnittsdarstellung von Figur 4 zu sehen. In der Gebrauchsstellung sind die scheibenförmigen Spreizelemente 22 beider Befestigungsstege 16 in Stirnansicht gesehen im wesentlichen deckungsgleich zueinander angeordnet. Die Spreizöffnungen 24 einander benachbarter Spreizelemente 22 sind aufgrund ihrer exzentrischen Anordnung in den Spreizelementen 22 in radialer Richtung zu den Befestigungsstegen 16 hin bzw. von den Befestigungsstegen 16 weg zueinander versetzt. Die Spreizöffnungen 24 bilden ein den Spreizdübel 10 in Längsrichtung durchsetzendes Spreizloch. Die Ausnehmungen 26 im Kopfbereich der Spreizelemente 22 haben im Gebrauchszustand des Spreizdübels 10 keine Funktion mehr, sie sind lediglich notwendig, um einen die Spreizöffnungen 24 beim Spritzgießen formenden, stiftförmigen Kern nach dem Spritzgießen entformen zu können.

In Seitenansicht weisen die Spreizelemente 22 der beiden Befestigungsstege 16 eine zueinander komplementäre Form auf. Im Gebrauchszustand 36 des Spreizdübels 10, d. h. wenn die Spreizelemente 22 in radialer Richtung des Spreizdübels 10 zwischeneinander gedrückt sind, greifen die Spreizelemente 22 nach Art eines Reißverschlusses ineinander, der Zwischenraum 34 zwischen den Spreizelementen 22 ist im wesentlichen geschlossen. Der Spreizdübel 10 ist nach dem Spritzgießen unmittelbar gebrauchsfertig. Beim Einführen in ein nicht dargestelltes Bohrloch werden die Spreizelemente 22 aufgrund des Einschlagendes 20 und durch Anlage der Befestigungsstege 16 an einer Bohrlochwandung vom vorderen Dübelende beginnend ineinander in die Gebrauchsstellung 36 gedrückt. Es ist also nicht notwendig, den Spreizdübel 10 nach dem Spritzgießen in einem separaten Arbeitsgang durch Ineinanderdrücken der Spreizelemente 22 vom Ausgangszustand 32 in den Gebrauchszustand 36 zu verbringen.

Zum Aufspreizen des Spreizdübels 10, um den Spreizdübel 10 in einem Bohrloch zu verankern, wird eine Spreizschraube durch den Dübelschaft 12 in das von den Spreizöffnungen 24 gebildete Spreizloch eingebracht. Die nicht dargestellte Spreizschraube richtet die Spreizöffnungen 24 koaxial zueinander und koaxial zum Spreizdübel 10 aus. Dadurch werden einander benachbarte Spreizelemente 22 radial in entgegengesetzten Richtungen zueinander verschoben und dadurch der Spreizdübel 10 in seinem Spreizbereich 18 aufgespreizt. Beim Aufspreizen werden die Befestigungsstege 16 auseinandergedrückt, so daß sich eine großflächige Anlage im Bohrloch ergibt. Zusätzlich oder ausschließlich kann die Aufspreizung auch durch Einbringen einer Spreizschraube erfolgen, deren Durchmesser größer als der Durchmesser der Spreizöffnungen 24 ist. Durch eine solche Spreizschraube werden die Spreizelemente 22 aufgeweitet, d. h. der Spreizdübel 10 wird in seinem Spreizbereich 18 aufgespreizt.

Innen im Dübelschaft 12 ist eine Einschlagsperre 38 in Form eines Gewindegangs einstückig angebracht. Dieser Gewindegang 38 greift in ein Schraubengewinde der nicht dargestellten Spreizschraube ein und fixiert dadurch den Spreizdübel 10 in axialer Richtung an der Spreizschraube. Die Spreizschraube wird vor dem Einbringen des Spreizdübels 10 in das Bohrloch in den Dübelschaft 18 so tief eingebracht, daß die Einschlagsperre 38 in das Schraubengewinde eingreift und sich eine Schraubenspitze im Bereich eines rückwärtigen Endes des Spreizbereichs 18 des Spreizdübels 10 befindet. Über die Spreizschraube läßt sich der Spreizdübel 10 in das Bohrloch eintreiben, wobei die Einschlagsperre 38 dem Spreizdübel 10 an der Spreizschraube ausreichenden Halt in axialer Richtung zum Eintreiben des Spreizdübels 10 in das Bohrloch gibt. Sobald der Einschlagbund 14 in Anlage an einem Mauerwerk oder dgl. kommt, in welchem das Bohrloch angebracht ist, hält der Einschlagbund 14 den Spreizdübel 10 in axialer Richtung, so daß sich der Spreizdübel 10 nicht tiefer in das Bohrloch eintreiben läßt. Die Spreizschraube läßt sich nun zum Aufspreizen des Spreizdübels 10 in dessen Spreizbereich 18 eintreiben.

Ein Übergangsbereich 40 vom Dübelschaft 12 zum Spreizbereich 18 wird von den beiden Befestigungsstegen 16 überwunden. Um ein Abknicken des Spreizdübels beim Eintreiben in das Bohrloch im Übergangsbereich 40 zu vermeiden, weist der Spreizdübel 10 einen Übergangstubus 42 auf, der den Dübelschaft 12 einstückig mit dem Spreizbereich 18 verbindet. Der Übergangstubus 42 ist in radialer Richtung verformbar, d. h. sein Quermesser ist veränderlich. Der Übergangstubus 42 weist zu diesem Zweck einen Querschnitt auf, dessen Form einer Acht ähnlich ist, d. h. er ist unter Bildung zweier Längsfalten 44 an zwei einander gegenüberliegenden Stellen seines Umfangs nach innen umgeformt (Figur 5). Durch diese Längsfalten 44 läßt sich der Übergangstubus 42 aufweiten oder verengen. Auf diese Weise ist es möglich, den Spreizdübel 10 im Spreizbereich 18 vom Ausgangszustand 32 in den Gebrauchszustand 36 zusammenzudrücken und anschließend zum Aufspreizen die Spreizschraube durch den Übergangstubus 42 hindurch in den Spreizbereich 18 einzubringen. Trotz der Veränderbarkeit des Quermessers des Übergangstubus 42 gibt der Übergangstubus 42 dem Spreizdübel 10 Knickfestigkeit im Übergangsbereich 40.

## Patentansprüche

1. Spreizdübel (10) mit einem sich im wesentlichen in Längsrichtung des Spreizdübels (10) erstreckenden Spreizbereich (18), in welchem der Spreizdübel (10) Spreizelemente (22) aufweist, die scheibenförmig ausgebildet und näherungsweise in Radialebenen des Spreizdübels (10) angeordnet sind und die mit in Längsrichtung des Spreizdübels (10) durchgehenden Spreizöffnungen (24) versehen sind, welche gemeinsam ein den Spreizbereich (18) des Spreizdübels (10) in Längsrichtung durchsetzendes Spreizloch bilden, wobei in einem Gebrauchszustand des Spreizdübels (10) die Spreizelemente (22) kammartig ineinander greifen, wobei einander benachbarte Spreizelemente (22) in einem Ausgangszustand des Spreizdübels (10) einen quer durch den Spreizdübel (10) hindurchgehenden Zwischenraum (34) voneinander aufweisen und wobei die Spreizöffnungen (24) im Ausgangszustand des Spreizdübels (10) unverdeckt von anderen Spreizelementen (22) im jeweiligen Spreizelement (22) angeordnet sind, **dadurch gekennzeichnet, dass** im Ausgangszustand des Spreizdübels (10) die Spreizelemente (22) radial auseinandergezogen sind, so dass einander benachbarte Spreizelemente (22) in axialer Richtung betrachtet sich nicht oder nur teilweise überdecken, und dass zum Verbringen des Spreizdübels (10) in den Gebrauchszustand die Spreizelemente (22) entlang der Radialebenen zwischeneinander schiebbar sind.

2. Spreizdübel nach Anspruch 1, **dadurch gekennzeichnet, dass** der Spreizdübel (10) in seinem Spreizbereich (18) sich im wesentlichen in Längsrichtung des Spreizdübels (10) erstreckende Befestigungsstege (16) aufweist, mit denen die Spreizelemente (22) an einer Stelle ihres Umfangs verbunden sind, wobei einander benachbarte Spreizelemente (22) mit verschiedenen Befestigungsstegen (16) verbunden sind.

3. Spreizdübel nach Anspruch 1, **dadurch gekennzeichnet, dass** die Spreizöffnungen (24) exzentrisch in den Spreizelementen (22) angeordnet sind.

4. Spreizdübel nach Anspruch 3, **dadurch gekennzeichnet, dass** die Spreizöffnungen (24) in Richtung von dem Befestigungssteg (16) weg, mit dem das jeweilige Spreizelement (22) verbunden ist, exzentrisch im jeweiligen Spreizelement (22) angeordnet sind.

5. Spreizdübel nach Anspruch 1, **dadurch gekennzeichnet, dass** der Zwischenraum (34) in Längsrichtung des Spreizdübels (10) mäanderförmig zwischen den Spreizelementen (22) hindurch verläuft.

6. Spreizdübel nach Anspruch 1, **dadurch gekennzeichnet, dass** die Spreizöffnungen (24) exzentrisch so in den Spreizelementen (22) angeordnet sind, dass sie im Ausgangszustand (32) des Spreizdübels (10) miteinander fluchten.

7. Spreizdübel nach Anspruch 1, **dadurch gekennzeichnet, dass** die Spreizelemente (22) in einer Richtung quer zum Spreizdübel (10) dicker werden, wobei einander benachbarte Spreizelemente (22) in unterschiedlichen Richtungen dicker werden.

8. Spreizdübel nach Anspruch 1, **dadurch gekennzeichnet, dass** der Spreizdübel (10) ein sich verjüngendes Einschlagende (20) an seinem vorderen Dübelende aufweist, an dem sich der Spreizdübel (10) im Ausgangszustand auf einen Durchmesser verjüngt, der kleiner als ein Nenndurchmesser des Spreizdübels (10) ist.

9. Spreizdübel nach Anspruch 1, **dadurch gekennzeichnet, dass** der Spreizdübel (10) einen hohlzylindrischen Dübelschaft (12) aufweist, der über einen Übergangstubus (42) mit dem Spreizbereich (18) verbunden ist, wobei der Übergangstubus (42) einen veränderbaren Querschnitt aufweist.

10. Spreizdübel nach Anspruch 9, **dadurch gekennzeichnet, dass** der Übergangstubus (42) als im Durchmesser veränderlicher Faltenbalg mit in Längsrichtung des Spreizdübels (10) verlaufenden Falten (44) ausgebildet ist.

11. Spreizdübel nach Anspruch 1, **dadurch gekennzeichnet, dass** der Spreizdübel (10) ein Spritzgießteil aus Kunststoff ist.

## Claims

1. Expansible fixing plug (10) having an expansion region (18) extending substantially in the longitudinal direction of the expansible fixing plug (10), in which expansion region (18) the expansible fixing plug (10) has expansion elements (22) which are disc-shaped and are arranged approximately in radial planes of the expansible fixing plug (10) and which are provided with expansion openings (24) passing through them in the longitudinal direction of the expansible fixing plug (10), which expansion openings (24) together form an expansion hole which extends through the expansion region (18) of the expansible fixing plug (10) in the longitudinal direction, the expansion elements (22) engaging in one another in a comb-like manner when the expansible fixing plug (10) is in an in-use state, and when the expansible fixing plug (10) is in an initial state adjacent expansion elements (22) have an intermediate space (34) between them which extends transversely through the expansible fixing plug (10), and when the expansible fixing plug (10) is in the initial state the expansion openings (24) are arranged in the respective expansion element (22) in such a manner that they are not covered by other expansion elements (22), **characterized in that** when the expansible fixing plug (10) is in the initial state the expansion elements (22) are spread apart radially from one another, so that adjacent expansion elements (22), seen in the axial direction, do not overlap one another or only partly overlap one another, and in order to bring the expansible fixing plug (10) into the in-use state, the expansion elements (22) can be pushed between one another along the radial planes.

2. Expansible fixing plug according to claim 1, **characterized in that** the expansible fixing plug (10) has in its expansion region (18) securing ribs (16) that extend substantially longitudinally of the expansible fixing plug (10), to which securing ribs (16) the expansion elements (22) are connected at a point on their periphery, adjacent expansion elements (22) being connected to different securing ribs (16).

3. Expansible fixing plug according to claim 1, **characterized in that** the expansion openings (24) are arranged eccentrically in the expansion elements (22).

4. Expansible fixing plug according to claim 3, **characterized in that** the expansion openings (24) are arranged eccentrically in the respective expansion element (22) in the direction away from the securing rib (16) to which the expansion element (22) in question is connected.

5. Expansible fixing plug according to claim 1, **characterized in that** the intermediate space (34) has a meandering course between the expansion elements (22) in the longitudinal direction of the expansible fixing plug (10).

6. Expansible fixing plug according to claim 1, **characterized in that** the expansion openings (24) are arranged eccentrically in the expansion elements (22) in such a manner that they are in alignment with one another when the expansible fixing plug (10) is in the initial state (32).

7. Expansible fixing plug according to claim 1, **characterized in that** the expansion elements (22) increase in thickness in a direction transverse to the expansible fixing plug (10), adjacent expansion elements (22) increasing in thickness in different directions.

8. Expansible fixing plug according to claim 1, **characterized in that** the expansible fixing plug (10) has at its forward fixing plug end a tapering driving-in end (20) at which, in the initial state, the expansible fixing plug (10) tapers to a diameter that is smaller than the nominal diameter of the expansible fixing plug (10).

9. Expansible fixing plug according to claim 1, **characterized in that** the expansible fixing plug (10) has a hollow-cylindrical fixing plug shank (12) which is connected to the expansion region (18) by way of a transition tube (42), the transition tube (42) having an alterable cross-section.

10. Expansible fixing plug according to claim 9, **characterized in that** the transition tube (42) is in the form of a folding bellows the diameter of which is alterable, which has folds (44) extending longitudinally of the expansible fixing plug (10).

11. Expansible fixing plug according to claim 1, **characterized in that** the expansible fixing plug (10) is an injection-moulded component of plastics.

## Revendications

1. Cheville d'expansion (10) avec une zone d'expansion (18) s'étendant essentiellement dans le sens longitudinal de la cheville d'expansion (10) dans laquelle la cheville d'expansion (10) comporte des éléments d'expansion (22) qui sont conçus en forme de disques et qui sont disposés approximativement dans des plans radiaux de la cheville d'expansion (10) et qui sont munis d'ouvertures d'expansion (24) continues dans le sens longitudinal de la cheville d'expansion (10) qui forment ensemble un trou d'expansion traversant la zone d'expansion (18) de la cheville d'expansion (10) dans le sens longitudinal, moyennant quoi, dans un état d'utilisation de la cheville d'expansion (10), les éléments d'expansion (22) s'engrènent les uns dans les autres comme un peigne, moyennant quoi des éléments d'expansion (22) voisins les uns des autres, dans un état initial de la cheville d'expansion (10), comportent un intervalle (34) s'étendant transversalement à travers la cheville d'expansion (10) et moyennant quoi les ouvertures d'expansion (24), dans l'état initial de la cheville d'expansion (10), sont disposés de manière à ne pas être recouvertes par d'autres éléments d'expansion (22) dans l'élément d'expansion concerné (22), **caractérisée en ce que**, dans l'état initial de la cheville d'expansion (10), les éléments d'expansion (22) sont écartés les uns des autres dans le sens radial de sorte que des éléments d'expansion voisins les uns des autres (22) ne se recouvrent pas ou se recouvrent seulement partiellement dans le sens axial et que les éléments d'expansion (22) sont déplaçables les uns par rapport aux autres le long des plans radiaux pour amener la cheville d'expansion (10) à l'état d'utilisation.

2. Cheville d'expansion selon la revendication 1, **caractérisée en ce que** la cheville d'expansion (10) comporte dans sa zone d'expansion (18) des arêtes de fixation (16) s'étendant essentiellement dans le sens longitudinal de la cheville d'expansion (10) avec lesquelles les éléments d'expansion (22) sont reliés en un point de leur circonférence, moyennant quoi des éléments d'expansion voisins les uns des autres (22) sont reliés à différentes arêtes de fixation (16).

3. Cheville d'expansion selon la revendication 1, **caractérisée en ce que** les ouvertures d'expansion (24) sont disposées de manière excentrique dans les éléments d'expansion (22).

4. Cheville d'expansion selon la revendication 3, **caractérisée en ce que** les ouvertures d'expansion (24) sont disposées de manière excentrique dans l'élément d'expansion (22) correspondant en s'éloignant de l'arête de fixation (16) avec laquelle l'élément d'expansion (22) correspondant est relié.

5. Cheville d'expansion selon la revendication 1, **caractérisée en ce que** l'intervalle (34) s'étend en forme de méandre entre les éléments d'expansion (22) dans le sens longitudinal de la cheville d'expansion (10).

6. Cheville d'expansion selon la revendication 1, **caractérisée en ce que** les ouvertures d'expansion (24) sont disposées de manière excentrique dans les éléments d'expansion (22) de façon à ce qu'elles soient au même niveau dans l'état initial (32) de la cheville d'expansion (10).

7. Cheville d'expansion selon la revendication 1, **caractérisée en ce que** les éléments d'expansion (22) s'épaississent dans un sens transversal par rapport à la cheville d'expansion (10), moyennant quoi des éléments d'expansion voisins les uns des autres (22) s'épaississent dans des directions différentes.

8. Cheville d'expansion selon la revendication 1, **caractérisée en ce que** la cheville d'expansion (10) comporte une extrémité à enfoncer (20) qui se rétrécit à son extrémité avant où la cheville d'expansion (10), dans l'état initial, se rétrécit jusqu'à un diamètre qui est inférieur à un diamètre nominal de la cheville d'expansion (10).

9. Cheville d'expansion selon la revendication 1, **caractérisée en ce que** la cheville d'expansion (10) est munie d'une tige de cheville (12) creuse cylindrique qui est reliée à la zone d'expansion (18) par un tube de jonction (42), la section du tube de jonction (42) étant variable.

10. Cheville d'expansion selon la revendication 9, **caractérisée en ce que** le tube de jonction (42) est conçu comme un soufflet avec un diamètre variable avec des plis (44) s'étendant dans le sens longitudinal de la cheville d'expansion (10).

11. Cheville d'expansion selon la revendication 1, **caractérisée en ce que** la cheville d'expansion (10) est une pièce moulée par injection en matière plastique.
